Europäisches Patentamt

European Patent Office

Office européen des brevets

(19)

(11) Numéro de publication: **0 542 642 B1**

# (12) FASCICULE DE BREVET EUROPEEN

(45) Date de publication de fascicule du brevet: **12.07.95**   (51) Int. Cl.⁶: **B23Q 7/14**, B65G 25/02

(21) Numéro de dépôt: **92420388.8**

(22) Date de dépôt: **28.10.92**

(54) **Dispositif rapide d'amenage et de positionnement à course horizontale fractionnée.**

(30) Priorité: **13.11.91 FR 9114199**

(43) Date de publication de la demande:
**19.05.93 Bulletin 93/20**

(45) Mention de la délivrance du brevet:
**12.07.95 Bulletin 95/28**

(84) Etats contractants désignés:
**CH DE ES FR GB IT LI**

(56) Documents cités:
**FR-A- 2 566 888**
**US-A- 4 629 384**
**US-A- 4 790 426**
**US-A- 4 832 544**

(73) Titulaire: **SCHNEIDER ELECTRIC SA**
**40, avenue André Morizet**
**F-92100 Boulogne-Billancourt (FR)**

(72) Inventeur: **Terracol, Claude, Merlin Gerin**
**Sce. Propriété Industrielle**
**F-38050 Grenoble Cédex 9 (FR)**

(74) Mandataire: **Hecke, Gérard et al**
**Schneider Electric SA,**
**Sce. Propriété Industrielle**
**F-38050 Grenoble Cédex 09 (FR)**

# Description

L'invention est relative à un système de production à dispositif rapide d'amenage et de positionnement de produits desservant des équipements automatiques placés en ligne entre un convoyeur amont d'alimentation, et un convoyeur aval d'évacuation, comportant:

- un support mobile, notamment en forme de règle, actionnée par un mécanisme engendrant un cycle rectangulaire,
- un plan de travail sur lequel la règle est susceptible de déposer au cours du cycle des produits à traiter,
- des stations ou modules de travail disposés en regard du plan de travail,
- ledit cycle de déplacement de la règle comprenant un premier mouvement vertical généré à partir d'une première cinématique à cames, et un deuxième mouvement horizontal assuré par une deuxième cinématique de conversion rotation/translation.

Un tel système est divulgué dans le document FR-A-2.566.888.

Selon la demande de brevet français n° 91,02708 (FR-A-2 673 611) du 05.03.91 de la demanderesse, le mécanisme engendre un cycle rectangulaire à pas de pèlerin, et chacun des mouvements des deux cinématiques est actionné par un moteur, la synchronisation nécessaire étant assurée par des moyens électroniques. Cette synchronisation est rendue particulièrement aisée si on utilise des moteurs de pas à pas.

Ce système permet d'obtenir des courses horizontales longues, notamment nécessaires quand une machine doit effectuer une opération dont la durée est incompatible avec la cadence de production demandée, et qu'il faut équiper la machine de plusieurs, à savoir N module s de travail fonctionnant en simultanéité pour effectuer cette opération. Le produit à véhiculer étant placé sur des palettes, il faut alors que la règle mobile d'amenage et de positionnement prenne en charge N palettes simultanément et les déplace d'une course N x P, P étant le pas géométrique de la machine à "pas multiple".

L'objet de l'invention consiste à perfectionner le cycle d'un dispositif d'amenage pour obtenir un mouvement horizontal à courses variables.

Le fait de disposer de deux motorisations indépendantes pour les deux mouvements vertical et horizontal offre en effet cette possibilité.

La flexibilité de la course horizontale est mise à profit pour traiter des produits composés de plusieurs éléments disposés côte à côte dans le sens du déplacement, une même opération intéressant chacun de ces éléments, donc pouvant être répétée n fois s'il y a n éléments.

Une machine monopas classique devrait, pour cette opération, être équipée de n modules de travail, chacun de ces modules étant dédié à un des n éléments. Selon leur encombrement, les n modules peuvent être rassemblés sur la même station de travail de la machine, ou répartis sur plusieurs stations.

Cette configuration s'impose si la durée de l'opération occupe normalement le temps disponible dans le cycle de la machine, déduction faite du temps de transfert. Par contre, si le cycle de la machine, défini en fonction de la production visée, est suffisant pour loger deux ou plusieurs opérations successives, il peut être intéressant d'en profiter pour réduire le nombre de modules de travail, surtout si ces derniers sont coûteux. Supposons par exemple, que le produit comporte deux éléments sur lesquels une même opération est à effectuer, que la durée de cette opération est de 0,5 seconde, et que le cycle de la machine est de 2,4 secondes. Au vu de ces chiffres, et des performances habituelles des cinématiques concernées, un seul module de travail peut facilement traiter les deux éléments du produit successivement. Il suffit pour cela qu'au cours du cycle, chacun de ces éléments lui soit présenté pendant une durée minimale de 0,5s. On peut dès lors imaginer le cylce global suivant:

- situation initiale: élément A présenté en position de travail
- travail sur l'élément A = 0,5s
- premier mouvement de transfert partiel = 0,7s
- travail sur l'élément B = 0,5s
- deuxième mouvement de transfert partiel = 0,7s

le total est alors de 2,4s, (les temps de transfert incluant les montées et les descentes de la règle mobile).

Si le pas géométrique de la machine est égal à P, et si les éléments A et B se déduisent l'un de l'autre par une translation de longueur a, le premier transfert partiel se fera avec une course égale à a, l'élément B venant prendre la place de l'élément A devant le module de travail, et le deuxième transfert partiel se fera avec une course P-a, correspondant à un changement de palette.

Les deux mouvements de transferts partiels correspondent à des courses horizontales d'avance effectuées en position haute. Concernant la course de recul, celle-ci a avantage à être effectuée en totalité pendant une des phases de travail, par exemple sur l'élément B. Pour le travail sur l'élément A, la règle mobile ne fait alors que déposer les palettes sur le plan de travail et les reprendre une fois l'opération effectuée, sans avoir effectué entre temps de mouvement horizontal.

La course demandée au dispositif de transfert horizontal se limite au pas géométrique P de la machine, et non à un multiple de celui-ci. Il est donc possible d'utiliser un dispositif à faible course.

Une zone de travail comporte deux positions se déduisant l'une de l'autre par une translation a. Chacune de ces positions est définie par des éléments de positionnement des palettes, par exemple des pions de centrage s'engageant dans des canons femelles installés sur la face inférieure des palettes. Une autre solution consisterait à ne conserver qu'un jeu de pions de centrage sur la machine, et à doubler les canons femelles sur les palettes. Cette dernière solution est citée à titre de variante, le nombre de palettes étant généralement très supérieur au nombre total de stations de travail sur une ligne.

Les zones d'entrée et de sortie de la machine doivent être compatibles avec le fractionnement du transfert. Si ces zones sont équipées de convoyeurs à double courroie, il faut que la plus grande des courses de transfert (a, ou plus vraisemblablement P-a) soit suffisante pour assurer le passage de la palette du convoyeur amont sur le plan de travail, et du plan de travail sur le convoyeur aval.

L'exemple qui vient d'être décrit constitue le cas le plus simple. On peut bien entendu généraliser à des configurations plus complexes, notamment si le produit se compose de n éléments, n étant supérieur à 2.

Les écartements successifs des n éléments peuvent être identiques (une seule cote a) ou différents (cotes a, b, c...). Les courses successives à assurer sont alors :

a, a ,a.......P-(n-1)x a

ou a, b, c....P-(a + b + c...)

Concernant le nombre de modules de travail à prévoir, plusieurs cas sont possibles :

Si on peut loger dans le cycle de la machine les n opérations et les n transferts inter-opérations, il suffira de prévoir un seul module de travail et de fractionner le transfert de façon à présenter successivement les n éléments devant ledit module.

- Dans le cas contraire, il faut augmenter le nombre de modules de travail, c'est à dire faire travailler q modules de travail en simultanéité, le nombre q étant évidemment minimisé pour des motifs de coût. On testera donc successivement des valeurs croissantes de q, jusqu'à obtention d'une solution convenable.

- Si on arrive à une solution dans laquelle n est un multiple de q, le nombre s de séquences de travail nécessaires, donc de transferts élémentaires et de positions successives de la palette sera évidemment égal au rapport n/q, tous les modules de travail étant régulièrement sollicités.

- Si n n'est pas un multiple de q, le nombre s sera choisi tel que l'on ait s x q supérieur à n. Lors d'une des séquences, on n'utilisera alors qu'une partie des q modules. Exemple: si n = 3 et q = 2, une séquence mettra en oeuvre les 2 modules, et la séquence suivante un seul. L'un des modules ne sera donc utilisé qu'à 50%, mais on est obligé de l'accepter, le nombre q devant obligatoirement être entier.

- Enfin, dans certains cas, l'utilisation simultanée de la technique multipas et de la course fractionnée permet une meilleure optimisation du nombre q.

Exemple :    Production visée = 1500 produits/heure, n = 3 temps pour une séquence de travail = ts = 1,5s.

Les chiffres ci-dessus montrent qu'à chaque séquence de travail il faut sortir au minimum 1,875 élément. Ce chiffre étant supérieur à n/2, on ne peut donc pas fractionner. Il faut traiter les 3 éléments simultanément, donc installer q = 3 modules actifs.

Par contre, si on utilise une machine à double pas, travaillant sur 2 palettes simultanément on pourra se limiter à installer q = 2 modules actifs (1 par palette), et décomposer le cycle en trois séquences. Chacune de ces séquences donnant lieu à la production de deux éléments, on atteindra bien l'objectif visé. L'utilisation simultanée de la technique multipas et de la course fractionnée ne pose aucun problème particulier, puisque la même cinématique permet de réaliser les deux objectifs.

Concernant les s positionnements successifs des palettes sur le plan de travail, le problème se présente différemment selon que les côtes a, b, c....séparant les positions successives sont invariables ou variables selon les variantes de produits traitées. Dans le premier cas, la première solution citée plus haut (plusieurs jeux de pions fixes par station de travail) peut convenir. Par contre, elle ne convient pas dans le second cas. On peut alors envisager d'utiliser la deuxième solution (un seul jeu de pions fixes et s jeux de canons femelles par palette) mais il faut alors associer à chaque variante une famille de palettes, ce qui oblige à prévoir le stockage des palettes qui ne sont pas en service, et à organiser automatiquement le changement de palettes quand il y a changement de variante.

Cette solution étant assez lourde, on peut en envisager une troisième, qui consiste à prévoir sur le plan de travail un seul jeu de pions de positionnement, et sur les palettes un seul jeu de canons femelles, lesdits pions et lesdits canons étant disposés de telle sorte que quand ils sont engagés les uns dans les autres, les palettes se trouvent dans la position de travail correspondant au dernier élément à traiter. Soit par exemple le dernier élément D s'il y a au total 4 éléments A, B, C, D, séparés par les intervallles a, b, c. Les pions fixes ne pouvant assurer que la position D, les 3 autres positions A, B, C seront assurées par les pions équipant la règle, celle-ci ne descendant que d'une quantité juste suffisante pour que les palettes soient déposées sur le plan de travail, les pions de la règle restant engagés dans les canons correspondants sur les palettes. On pourra donc déposer les palettes une première fois en une position A quelconque, puis, l'opération A effectuée, procéder à une simple translation horizontale de valeur a (les palettes glissant sur le plan de travail). On arrive ainsi à la position B, et, après un processus analogue, à la position C. Pour passer à la position D, il faut alors, en plus de la dernière translation C, faire monter et redescendre les palettes pour les engager sur les pions fixes. Cet indexage fixe est rendu nécessaire par le fait que la règle doit alors être libérée pour pouvoir effectuer sa course de retour en position basse Cette solution présente l'avantage évident de pouvoir s'adapter, sans aucune complication mécanique, à des valeurs variables des courses a, b, c... l'adaptation lors du passage d'une variante à une autre pouvant se faire uniquement par des moyens de programmation. Sur le plan mécanique, on verra plus loin que la cinématique nécessaire peut-être obtenue avec les moyens décrits plus haut (came standard pour les mouvements verticaux et dispositif à courroie sans fin pour les mouvements horizontaux).

D'autres avantages et caractéristiques ressortiront plus clairement de la description qui va suivre d'un mode de mise en oeuvre de l'invention donné à titre d'exemple non limitatif, et représenté aux dessins annexés, dans lesquels:

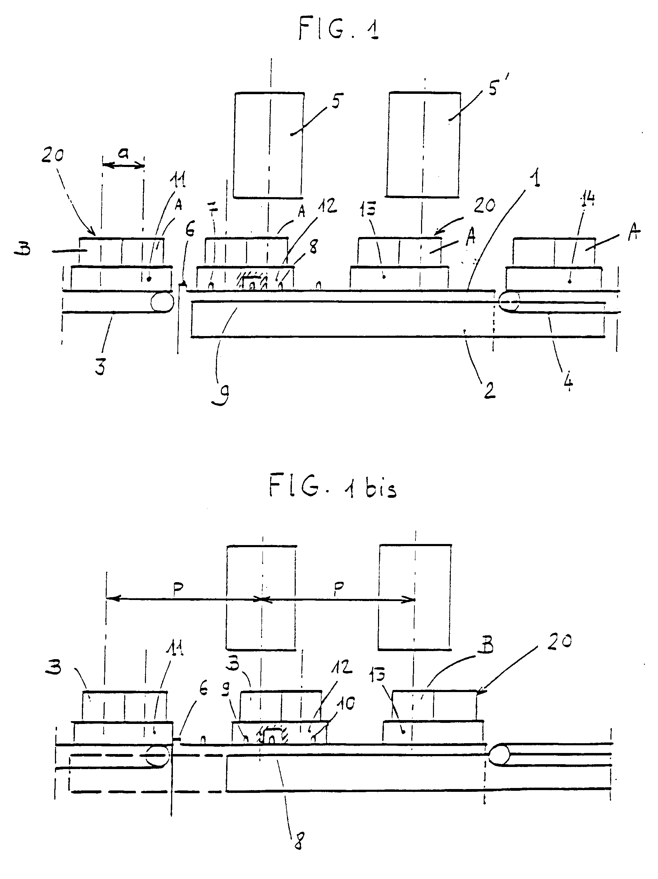

La figure 1 représente une vue schématique en élévation d'une machine à course fractionnée selon l'invention.

La figure 1bis est une vue identique à la figure 1, après un déplacement horizontal de la règle mobile.

La figure 2 montre un chronogramme du mouvement de la règle.

La figure 3 représente les positions successives de deux palettes d'une variante de réalisation, comprenant une machine à double pas travaillant sur un produit à trois éléments.

Les figures 4,4 bis représentent une machine similaire à celle des figures 1, 1bis, mais travaillant selon la troisième solution d'indexage précitée (dernier indexage par pions fixes et indexage précédent par les pions de la règle) ce qui permet de rendre variable le fractionnement de la course horizontale.

La figure 5 montre un chronogramme d'une telle machine à cour ses horizontales variables, mais travaillant sur un produit à 4 éléments A, B, C, D, le cycle total étant égal à C. (par exemple 3 secondes)

Cette machine travaille également selon la troisième solution d'indexage précitée (dernier indexage par pions fixes et indexages précédents par les pions de la règle)

La machine selon les figures 1 et 1 bis comporte un plan de travail 1, une règle mobile 2, un convoyeur d'alimentation 3, un convoyeur d'évacuation 4, et deux modules de travail 5,5'.

Le produit 20 à traiter est supporté par des palettes 11,12,13,14, et se compose de deux éléments se déduisant l'un de l'autre par une translation a.

Sur la figure 1, la règle 2 vient de déposer les palettes 12 et 13 sur le plan de travail 1, de telle sorte que les éléments A de droite des produits 20 portés par ces palettes soient présentés au droit des modules de travail 5,5'.

En même temps, la palette 14 vient d'être déposée sur le convoyeur d'évacuation 4, et une nouvelle palette 11 est en cours d'amenage par le convoyeur d alimentation 3.

Pendant la durée de l'opération effectuée par les modules 5,5', la règle 2 reste en attente dans la position de la figure 1. Elle remonte ensuite prendre en charge les palettes 12 et 13, mais pas la palette 14 qui a déjà été évacuée par le convoyeur d'évacuation 4.

La règle 2 effectue alors un déplacement a et redépose les palettes 12 et 13 sur le plan de travail 1, ce qui conduit à la situation de la figure 1bis, les éléments de produit 20 présentés sous les modules de travail 5,5' étant cette fois les éléments B de gauche.

Pendant la durée de l'opération sur ces éléments, la règle 2 effectue sa course de retour égale à P correspondant au pas géométrique de la machine en position basse, ce qui l'amène dans la position représentée en trait interrompu (figure 1bis). A ce moment là, la palette 11 a eu le temps de venir en engagement contre la butée 6.

La règle 2 remonte alors pour prendre en charge les palettes 11,12,13 et effectue une course en translation égale à p-a, ce qui nous ramène à la situation de la figure 1, les palettes 11,12,13 occupant les places précédemment occupées par 12,13,14.

Dans un but de simplicité, la machine présentée n'effectue que deux opérations, mais il est évident qu'on peut étendre le principe à un nombre quelconque d'opérations, en allongeant le plan de travail 1. On peut aussi imaginer qu'une ou plusieurs de ces opérations n'intéressent qu'un seul des éléments du produit 20. Il suffit pour cela de rendre inactifs les modules de travail correspondants quand les autres éléments se présentent en face d'eux.

Le positionnement précis des palettes 11 à 14 sur le plan de travail 1 est assuré par des pions de centrage coopérant avec des canons femelles fixés sur la face inférieure des palettes. Sur la figure 1 ont été représentés les pions 7 et 8 qui assurent le positionnement de la palette 12. Quand cette même palette, après une translation a, est arrivée dans la position de la figure 1bis, elle rencontre une nouvelle paire de pions 9 et 10 destinés à assurer son nouveau positionnement. Chaque station de travail comporte deux paires de pions de centrage. Lorsqu'un pion non utilisé se trouve néanmoins sous la palette, celle-ci doit comporter un dégagement pour lui permettre de se loger sans gêner la dépose. C'est le cas des pions 9 sur la figure 1 et 8 et sur la figure 1bis.

On peut généraliser à un produit qui comporterait n éléments disposés longitudinalement. Le cycle comporterait alors n translations a1,a2,...an et P-(a1 + a2 + ...an) et une course de retour toujours égale à P.

Pour permettre un transfert correct des palettes, notamment entre le convoyeur amont et le plan de travail 1, l'une des courses de transfert doit être suffisante le problème étant de faire passer une palette de la position d'attente contre la butée 6 (palette 11 sur la figure 1bis) à la première position de travail (palette 12 sur la figure 1). Dans la plupart des cas, aucune des courses a1,a2,..an ne remplira cette condition. Il faudra donc faire appel à la course P-(a1 + a2 + ...an), qui pourra toujours être rendue suffisante notamment en augmentant la course P si nécessaire. Cette contrainte peut d'ailleurs déjà exister pour n = 2.

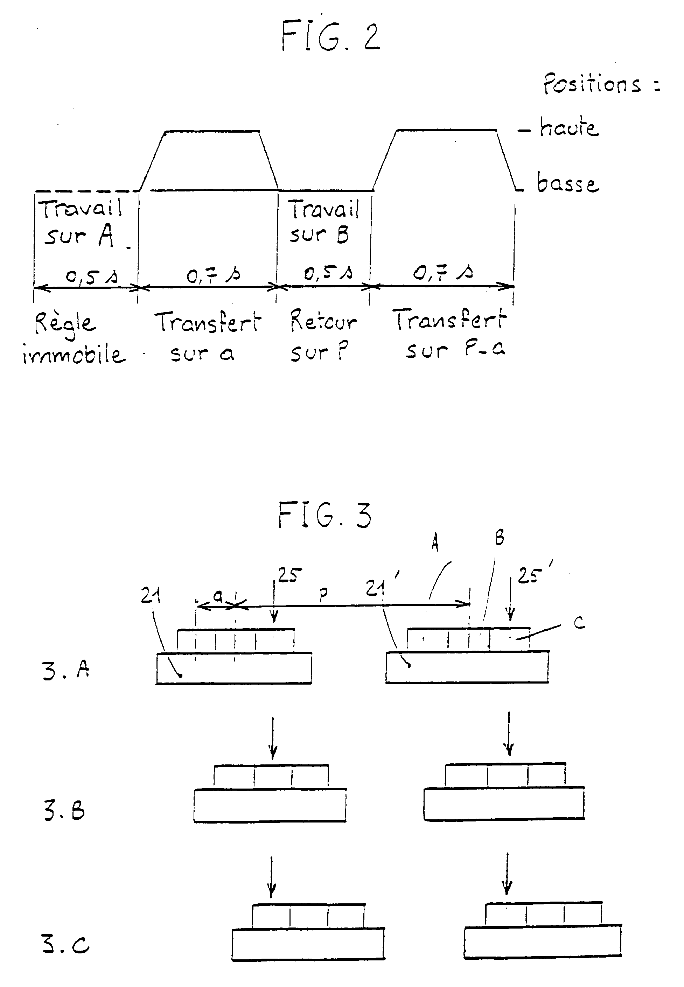

La figure 2 représente un chronogramme du mouvement de la règle 2, sur lequel on retrouve les parties déjà décrites:

- Travail sur élément A du produit 20, la règle étant immobile en position basse
- Transfert sur la distance a incluant montée et redescente.
- Travail sur l'élément B du produit 20, pendant que la règle 2 effectue sa cour se de retour sur la distance P
- Transfert sur le distance P-a incluant montée et redescente.

La figure 3 représente les positions successives de deux palettes 21,21' sur lesquelles travaillent en simultanéité les modules de travail représentés par les flèches 25,25'. Nous sommes ici dans le cadre d'une machine à double pas travaillant sur un produit à trois éléments A,B,C, espacés de a. Si la production visée est de 1500 produits/heure, et si la durée d'une séquence de travail complète (temps opératoire plus transfert) est de 1,5 secondes, le calcul présenté plus haut montre qu'il aurait fallu installer trois modules actifs en travaillant avec une machine monopas. Dans l'exemple, les deux modules 25,25' suffisent. En effet, en trois séquences 3A, 3B, 3C, on aura bien traité respectivement les éléments de droite (A), les éléments centraux (B) et les éléments de gauche (C). On aura donc exécuté deux exemplaires du produit en 4,5 s, ce qui donne 1600 à l'heure.

Les trois transferts successifs à exécuter sur une telle machine sont a, a et 2P-2a. Au niveau des temps deux des transferts seront donc sensiblement plus courts que le troisième, mais on peut considérer que la durée moyenne de 1,5 seconde pour une séquence n'en sera pas sensiblement affectée.

Au plan constructif, chaque station de travail de la machine devra comporter trois jeux de pions de centrage se déduisant les uns des autres par translation de valeur a.

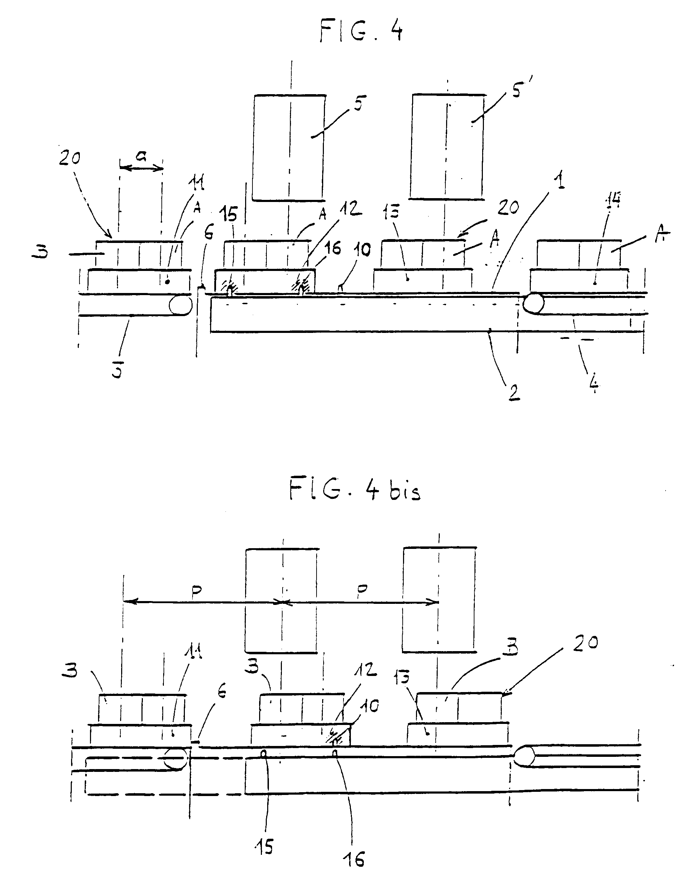

Sur les figures 4 et 4 bis, on trouve une machine similaire à celle des figures 1, 1 bis mais sur laquelle la cote a d'écartement des éléments du produit A et B peut être rendue variable. Contrairement à la machine précédente, les pions 15, 16 portés par la règle mobile 2 ont ici un rôle d'indexage qui apparaît clairement sur la figure 4. Après amenage horizontal des palettes dans la première position de travail (4) la règle est descendue très légèrement en dessous du plan de travail 1, ce qui permet de déposer les palettes sur ledit plan, tout en maintenant engagés les pions 15, 16 qui assurent le centrage. Après l'opération A, la règle effectue une montée et une translation a ( qui peuvent être partiellement simultanées) puis une redescente complète qui conduit à la situation de la figure 4 bis. La palette est alors centrée par les pions fixes 10, 10' (supposés disposés transversalement alors que les pions mobiles 15 et 16 se trouvent dans le plan médian de la règle et des palettes). Le centrage étant ainsi assuré, la règle peut alors reculer de la valeur P pour regagner sa position amont (représentée en trait interrompu).

Sur une telle machine, il est clair que la position de la figure 4 bis est constante, mais que celle de la figure 4 peut varier à volonté, ce qui permet d'ajuster la valeur de la cote a uniquement par des moyens de programmation.

Pour ne pas compliquer le dessin, on s'est limité à présenter un produit à 2 éléments A,B. Il est clair que ce principe peut être étendu à un nombre quelconque n d'éléments, les n-1 premiers centrages des palettes étant assurés par les pions 15, 16 de la règle 2, et le n ème par les pions fixes 10, 10'.

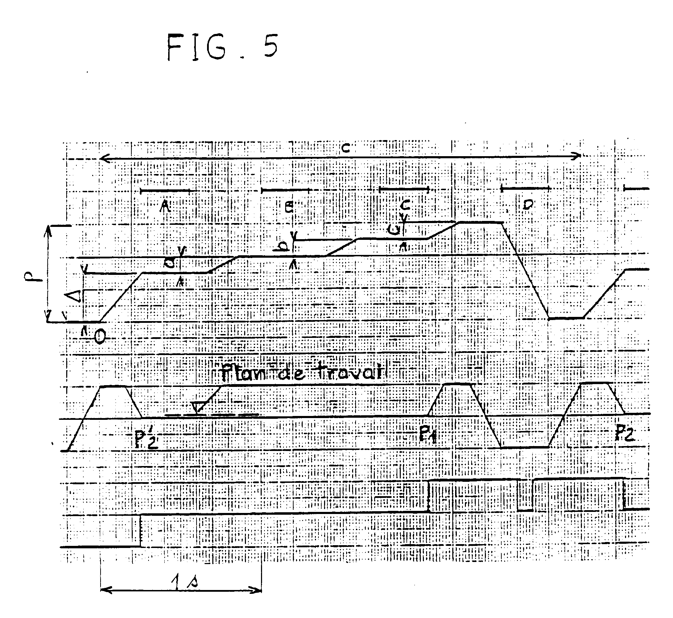

La figure 5 présente d'ailleur un chronogramme relatif à une telle machine destinée à traiter un produit à 4 éléments A, B, C, D dont les intervalles peuvent varier.

Sur cette figure les segments A, B, C, D du 1er graphe représentent les intervalles de temps affectés aux opérations sur les éléments correspondants (ici environ 0,3 s ). On notera que ces intervalles sont placés avec une périodicité constante, ce qui n'est pas une obligation mais une commodité, car on peut ainsi faire travailler les modules actifs à une cadence régulière.

Les 3 graphes suivants représentent respectivement :
- les déplacements horizontaux de la règle
- les déplacements verticaux de la règle
- la rotation de l'arbre à cames.

Si on suit le déroulement d'un cycle complet à partir de l'origine conventionnelle 0 (règle en position amont haute), on trouve successivement:
- Translation de $\Delta = P - (a+b+c)$ et dépose des palettes sur le plan de travail. Ces deux mouvements peuvent être en partie simultanés, car on n'a pas à engager les palettes sur des pions fixes, ce qui permet un accostage oblique.

Les palettes sont alors en position A.
- Arrêt en position A, pendant lequel s'effectue l'opération correspondante.
- translation de a, amenant en position B
- arrêt et opération en position B
- translation de b, amenant en position C
- Arrêt et opération en position C

Notons que, depuis l'arrivée en position A, il n'y a eu aucun déplacement vertical de la règle, celle ci ne faisant que faire glisser les palettes sur le plan de travail en se maintenant à une position très légèrement plus basse que celui-ci.
- Translation de C, amenant en position D et soulèvement des palettes vers la position haute (mouvements pouvant être en partie simultanés).
- Descente de la règle jusqu'à la position basse, les palettes étant au passage déposées sur le plan de travail.
- Retour horizontal de la règle de course P. Pendant ce retour prend place l'opération de travail D.
- Remontée de la règle en position haute, et prise en charge au passage des palettes, avec décalage d'un cran. Cette opération nous ramène à la situation initiale.

Concernant maintenant la rotation de l'arbre à cames, on s'aperçoit que celui-ci est conduit à effectuer un tour complet entre les points repérés P1 et P2. On note ici une brève interruption de cette rotation, qui n'est pas fondamentalement obligatoire, et qui a pour but d'allonger un peu le temps disponible pour le retour horizontal de la règle sur la course totale P, en évitant d'avoir à mettre en oeuvre des accélérations trop élevées. Si on remonte antérieurement à P1, on trouve :
- entre P'2 (soit un cycle avant P2) et P1, une zone d'immobilité de l'arbre à cames.
- entre P'1 (soit un cycle avant P1) et P'2, un tour de rotation, mais en sens inverse du tour effectué entre P1 et P2. En effet, les palettes arrivent de la position haute en P'2 et repartent vers la position haute en P1.

Cette cinématique est parfaitement compatible avec un profil de came standard, les séquences de rotation et d'arrêt étant obtenues par des moyens de programmation. Quant au mouvement horizontal, un dispositif de type à courroie sans fin actionné par moteur pas à pas, ou similaire est également bien adapté dans la mesure où il peut être programmé pour assurer de façon parfaitement flexible l'adaptation des courses a,b,c.

**Revendications**

1. Système de production à dispositif rapide d'amenage et de positionnement de produits desservant des équipements automatiques placés en ligne entre un convoyeur (3) amont d'alimentation, et un convoyeur (4) aval d'évacuation, comportant:
   - un support mobile, notamment en forme de règle (2), actionnée par un mécanisme engendrant un cycle rectangulaire,
   - un plan de travail (1) sur lequel la règle (2) est susceptible de déposer au cours du cycle des produits (20) à traiter,
   - des stations ou modules de travail (5,5') disposés en regard du plan de travail 1,
   - ledit cycle de déplacement de la règle (2) comprenant un premier mouvement vertical généré à partir d'une première cinématique à cames, et un deuxième mouvement horizontal assuré par une deuxième cinématique de conversion rotation / translation,
   caractérisé en ce que
   - le mécanisme comporte un cycle rectangulaire à pas de pèlerin,
   - chaque produit (20) à traiter comporte n éléments A,B,C... disposés côte à côte sur des palettes (11, 12, 13, 14) dans le sens du déplacement,
   - les deux cinématiques engendrant les premier et deuxième mouvements de la règle (2) sont actionnées par des motorisations indépendantes l'une de l'autre, de manière à réaliser n courses horizontales différentes au cours d'un cycle de travail sur les n éléments A,B,C, du produit 20 soumis à une même opération, les n-1 premières courses du deuxième mouvement horizontal étant destinées à présenter successivement les n éléments (A,B,C) du produit (20) en position de travail, et la course n horizontale étant réservée au renouvellement du produit (20), la deuxième cinématique étant notamment du type à courroie sans fin.

2. Système de production selon la revendication 1, caractérisé en ce que le dispositif est à pas simple, dans lequel le transfert des palettes (11,12,13,14) s'effectue individuellement au cours d'un cycle ayant un pas P égal à l'écartement des stations de travail (5,5'), la somme des n courses de transfert étant égale au pas P.

3. Système de production selon la revendication 1, caractérisé en ce que le dispositif est à pas multiple dans lequel les palettes (11,12,13,14) sont transférées par groupes de N d'une distance N x P, la somme des n courses de transfert étant égale à N x P.

4. Système de production selon l'une des revendications 1 à 3, caractérisé en ce que le plan de travail (1) est équipé de pions de centrage (7,8,9,10) destinés à coopérer avec un jeu d'organes de positionnement de formes conjuguées, agencés sur la face inférieure de chaque palette (11,12,13,14), de manière à assurer n positionnements successifs desdites palettes par rapport à la station de travail (5,5') correspondante.

5. Système de production selon l'une des revendications 1 à 3, caractérisé en ce que le plan de travail (1) est équipé à chaque station d'un seul jeu de pions de centrage (par exemple 8, 9), et en ce que les palettes (11, 12, 13, 14) sont équipées de n jeux d'organes de positionnement de formes conjuguées, permettant d'assurer n positionnements successifs desdites palettes par rapport à la station de travail (5, 5') correspondante.

6. Système de production selon la revendication 5, caractérisé en ce que les produits à traiter présentent plusieurs variantes dans lesquelles les éléments successifs à traiter (A, B, C, D...) sont séparés par des intervalles pouvant varier d'une variante à l'autre, le problème étant résolu en dédiant à chaque variante une famille de palettes de configuration correspondante en ce qui concerne les organes de positionnement.

7. Système de production selon l'une des revendications 1 à 3, caractérisé en ce que le plan de travail (1) est équipé à chaque station d'un seul jeu de pions de centrage (par exemple 10, 10') et en ce que les palettes (11, 12, 13,14) sont équipées d'un seul jeu d'organes de positionnement de formes conjuguées, la mise en regard desdits pions et desdits organes de positionnement fournissant le centrage correspondant à la dernière des n opérations à effectuer par l'organe de travail (5, 5'), les centrages correspondants aux n-1 opérations précédentes étant assurés par les pions (15, 16) équipant la règle, celle-ci, pour ces n-1 opérations, se plaçant verticalement à une position légèrement inférieure à celle du plan de travail (1), le passage d'une position à l'autre étant obtenu par simple translation horizontale, alors que le passage à la dernière position nécessite une montée et une redescente de la règle pour l'engagement des palettes sur les pions fixes (10, 10'), le dispositif ainsi constitué permettant de faire varier à volonté l'écartement des positions de travail successives correspondant aux éléments (A, B, C, D...) du produit à traiter, ceci sans avoir à changer les palettes.

**Claims**

1. A production system with a high-speed product lift and carry device feeding automatic equipment placed on a line between an up-line feed conveyor (3) and a down-line removal conveyor (4), comprising :
   - a mobile support, notably in the form of a rule (2), actuated by a mechanism generating a rectangular cycle,
   - a working plane (1) on which the rule (2) is able to place products (20) to be processed in the course of the cycle,
   - workstations or working modules (5, 5') arranged facing the working plane (1),
   - said movement cycle of the rule (2) comprising a first vertical movement generated by a first cam-based kinematic system, and a second horizontal movement performed by a second rotation / translation conversion kinematic system, characterized in that
   - the mechanism comprises a rectangular walking beam cycle,
   - each product (20) to be processed comprises n elements A,B,C... arranged side by side on palettes (11, 12, 13, 14) in the direction of the movement,
   - the two kinematic systems generating the first and second movements of the rule (2) are actuated by motorizations independent from one another, so as to perform n different horizontal travels in the course of a working cycle on the n elements (A,B,C) of the product (20) undergoing any one operation, the first n-1 travels of the second horizontal movement being designed to successively present the n elements (A,B,C) of the product (20) in the working position, and the horizontal travel n being reserved for renewal of the product (20), the second kinematic system being notably of the endless belt type.

2. The production system according to claim 1, characterized in that the device is of the single-step type, in which transfer of the palettes (11, 12, 13, 14) is performed individually in the course of a cycle having a step P equal to the distance between the workstations (5, 5'), the sum of the n transfer travels being equal to the step P.

3. The production system according to claim 1, characterized in that the device is of the multiple-step type, in which the palettes (11, 12, 13, 14) are transferred in groups of N over a distance of N x P, the sum of the n transfer travels being equal to N x P.

4. The production system according to one of the claims 1 to 3, characterized in that the working plane (1) is equipped with centring pins (7, 8, 9, 10) designed to cooperate with a set of positioning parts of conjugate shapes, arranged on the lower face of each palette (11, 12, 13, 14), in such a way as to ensure n successive positionings of said palettes with respect to the corresponding workstation (5, 5').

5. The production system according to one of the claims 1 to 3, characterized in that the working plane (1) is equipped at each workstation with one set of centring pins (for example 8, 9), and in that the palettes (11, 12, 13, 14) are equipped with n sets of positioning parts of conjugate shapes, authorizing to ensure n successive positioning of said palettes with respect to the corresponding workstation (5, 5').

6. The production system according to claim 5, characterized in that the products to be processed present several different versions in which the successive elements to be processed (A, B, C, D...) are separated by intervals able to vary from one version to the other, the problem being solved by dedicating to each version a family of palettes of corresponding configuration as far as the positioning parts are concerned.

7. The production system according to one of the claims 1 to 3, characterized in that the working plane (1) is equipped at each workstation with a single set of centring pins (for example 10, 10') and that the palettes (11, 12, 13, 14) are equipped with a single set of positioning parts of conjugate shapes, placing of said pins and said positioning parts facing one another providing the centring corresponding to the last of the n operations to be performed by the workstation (5, 5'), the centrings corresponding to the previous n-1 operations being performed by the pins (15, 16) equipping the rule, the latter, for these n-1 operations, being placed vertically in a position slightly lower than that of the working plane (1), movement from one position to the other being achieved by simple horizontal translation, whereas movement to the last position requires an upward followed by a downward movement of the rule for engagement of the palettes on the fixed pins (10, 10'), the device thus constituted enabling the distance between the successive working positions corresponding to the elements (A, B, C, D...) of the product to be processed to be varied at will, without having to change the palettes.

**Patentansprüche**

1. Fertigungseinrichtung mit einem schnellen Werkstück-Zustell- und -Positioniersystem zur Beschickung Von linear zwischen einem Antransportband und einem Abtransportband angeordneten automatisierten Fertigungsstationen, welche Fertigungseinrichtung
   - ein bewegliches Untergestell, insbesondere in Form eines Hubbalkens (2), der durch einen, einen Rechteckzyklus erzeugenden Mechanismus angetrieben wird,
   - eine Bearbeitungsebene (1), auf der der Hubbalken (2) im Verlauf des Bewegungszyklus' die zu bearbeitenden Werkstücke (20) ablegt, sowie
   - gegenüber der Bearbeitungsebene (1) angeordnete Bearbeitungsstationen oder -module (5, 5') umfaßt, wobei
   - der genannte Bewegungszyklus des Hubbalkens (2) eine erste, durch einen ersten Steuerkurvenmechanismus erzeugte vertikale Bewegung und eine zweite, durch einen zweiten Getriebemechanismus zur Umwandlung einer Drehung in eine geradlinige Bewegung erzeugte horizontale Bewegung umfaßt, dadurch gekennzeichnet, daß

- der Getriebemechanismus einen rechteckigen Pilgerschrittzyklus erzeugt,
- jedes zu bearbeitende Werkstück (20) n, in Transportrichtung nebeneinander auf Paletten (11, 12, 13, 14) angeordnete Einzelteile A, B, C, D umfaßt,
- die beiden, die erste und die zweite Bewegung des Hubbalkens (2) steuernden Getriebemechanismen durch voneinander unabhängige Motoren angetrieben werden, derart daß sie im Verlauf eines Bearbeitungszyklus' n unterschiedliche horizontale Verfahrwege der n, der gleichen Bearbeitung unterzogenen Einzelteile (A, B, C) des Werkstücks (20) bewirken, wobei die ersten n-1 Verfahrwege der zweiten Horizontalbewegung dazu dienen, die n Einzelteile (A, B, C) des Werkstücks (20) nacheinander in die jeweilige Bearbeitungsposition zu überführen, der n-te horizontale Verfahrweg für den Wechsel des Werkstücks (20) vorgesehen ist, und der zweite Getriebemechanismus insbesondere als Endlosriementrieb ausgeführt ist.

2. Fertigungseinrichtung nach Anspruch 1, dadurch gekennzeichnet, daß das Zustell- und Positioniersystem als Einfachschrittanlage ausgeführt ist, bei der der Transfer der Paletten (11, 12, 13, 14) im Verlauf eines Zyklus' mit einem Schrittmaß P entsprechend dem Abstand zwischen den Bearbeitungsstationen (5, 5') einzeln erfolgt, wobei die Summe der n Verfahrwege dem Schrittmaß P entspricht.

3. Fertigungseinrichtung nach Anspruch 1, dadurch gekennzeichnet, daß das Zustell- und Positioniersystem als Mehrfachschrittanlage ausgeführt ist, bei der die Paletten (11, 12, 13, 14) in Gruppen zu N über eine Strecke von N P weitertransportiert werden, wobei die Summe der n Verfahrwege dem Wert N x P entspricht.

4. Fertigungseinrichtung nach einem der Ansprüche 1 bis 3, dadurch gekennzeichnet, daß die Bearbeitungsebene (1) mit Zentrierstiften (7, 8, 9, 10) ausgerüstet ist, die dazu dienen, mit einem Satz komplementär geformter, an der Unterseite jeder Palette (11, 12, 13, 14) ausgebildeter Positionierelemente zusammenzuwirken, um n aufeinanderfolgende Positionen der genannten Paletten in Bezug auf die jeweilige Bearbeitungsstation (5, 5') zu gewährleisten.

5. Fertigungseinrichtung nach einem der Ansprüche 1 bis 3, dadurch gekennzeichnet, daß die Bearbeitungsebene (1) in jeder Bearbeitungsstation mit einem einzigen Zentrierstiftsatz (beispielsweise 8, 9) und die Paletten (11, 12, 13, 14) mit n Sätzen komplementär geformter Positionierelemente ausgerüstet sind, die es ermöglichen, n aufeinanderfolgende Positionen der genannten Paletten in Bezug auf die jeweilige Bearbeitungsstation (5, 5') zu gewährleisten.

6. Fertigungseinrichtung nach Anspruch 5, dadurch gekennzeichnet, daß die zu bearbeitenden Werkstücke in mehreren Varianten vorliegen, deren Einzelteile (A, B, C, D...) in Abständen aufeinanderfolgen, die je nach Variante unterschiedlich sein können, wobei das Problem dadurch gelöst wird, daß jeder Werkstückvariante ein Palettentyp mit entsprechend konfigurierten Positionierelementen zugeordnet ist.

7. Fertigungseinrichtung nach einem der Ansprüche 1 bis 3, dadurch gekennzeichnet, daß die Bearbeitungsebene (1) in jeder Bearbeitungs-Station mit einem einzigen Zentrierstiftsatz (beispielsweise 10, 10') und die Paletten (11, 12, 13, 14) mit einem einzigen Satz komplementär geformter Positionierelemente ausgerüstet sind, wobei das Ineinandergreifen der genannten Zentrierstifte und Positionierelemente die Zentrierung der Palette entsprechend dem letzten der n, durch die Bearbeitungsstation (5, 5') auszuführenden Bearbeitungsschritte gewährleistet, die den vorausgehenden n-1 Bearbeitungsschritten entsprechenden Zentrierungen durch die Zentrierstifte (15, 16) gewährleistet werden, die am Hubbalken angebracht sind, welcher sich zur Durchführung der n-1 Bearbeitungen in eine leicht unterhalb der Bearbeitungsebene (1) liegende Stellung vertikal verschiebt, der Übergang von einer Position zur anderen durch einfache horizontale Verschiebung erfolgt, während der Übergang in die letzte Position ein Anheben und erneutes Absenken des Hubbalkens erfordert, um die Paletten auf die feststehenden Zentrierstifte (10, 10') aufzusetzen, und das auf diese Weise ausgebildete System eine beliebige Veränderung der Abstände zwischen den aufeinanderfolgenden Bearbeitungspositionen entsprechend den Einzelteilen (A, B, C, D..) des zu bearbeitenden Werkstücks ermöglicht, ohne daß ein Palettenwechsel erforderlich ist.

FIG. 1

FIG. 1 bis

# FIG. 2

Positions :
- haute
- basse

| Travail sur A | | Travail sur B | |
| 0,5 s | 0,7 s | 0,5 s | 0,7 s |
| Règle immobile | Transfert sur a | Retour sur P | Transfert sur P-a |

# FIG. 3

3.A

3.B

3.C

FIG. 4

FIG. 4 bis

FIG. 5